# EUROPEAN PATENT APPLICATION

(11) **EP 4 729 977 A1**
(43) Date of publication of application: **22.04.2026**
(21) Application number: 25182218.5
(22) Date of filing: 12.06.2025
(51) Int. Cl.: G01S 7/02, G01S 7/40, G01S 7/497, G01S 7/499

(54) **POLARIZATION DETECTION SYSTEM AND METHOD**

(30) Priority: 18.10.2024 US 202418920371
(71) Applicant: Rohde & Schwarz GmbH & Co. KG, 81671 München (DE)
(72) Inventor: Hamberger, Gerhard, Dr., 83556 Griesstätt (DE); Neidhardt, Steffen, 84405 Dorfen (DE); Bogner, Maximilian, 90419 Nürnberg (DE)
(74) Representative: Rupp, Christian

(57) **Abstract**

The present disclosure relates to a polarization detection system for detecting a polarization of a ranging device. The polarization detection system comprises: at least two receiving elements with different polarizations, wherein the at least two receiving elements are configured to receive an EM signal emitted by the ranging device; a power and/or phase detector configured to detect individual signal power and/or phase information of the EM signal received with the at least two receiving elements; and a processor configured to determine the polarization of the EM signal based on the individual signal power and/or phase information. The processor is further configured to: determine a signal power value of the EM signal based on the individual signal power information and the polarization of the EM signal, control one or more transmitting elements of a ranging test system to transmit an EM response signal based on the determined polarization of the EM signal, and/or adapt an RCS value of the EM response signal based on the determined polarization of the EM signal.

## Description

### Technical Field

The disclosure relates to a polarization detection system and method for detecting a polarization of a ranging device, such as an automotive radar sensor.

### Background Art

Radar sensors can detect the distance and the speed of objects in an environment by emitting radar signals into the environment and capturing reflections of the signals. For example, such radar sensors are an essential technology for advanced driver assistance systems.

Testing of radar sensors is important to understand their behavior under varying conditions and to make sure that the sensors work properly. Such testing can be performed over-the-air (OTA) using so-called radar target simulators (RTS) which stimulate the radar sensors with radar signals under realistic conductions.

When carrying out an OTA test of a radar sensor, the signal power and polarization of signals emitted by the radar sensor should be determined first to create a suitable test environment. However, accurately measuring the signal power and polarization of a radar sensor can be cumbersome and time consuming.

### Summary

Thus, there is a need to provide an improved polarization detection system and method, which avoid the above-mentioned disadvantages.

These and other objectives are achieved by the embodiments provided in the enclosed independent claims. Advantageous implementations of the present disclosure are further defined in the dependent claims.

According to a first aspect, the disclosure relates to a polarization detection system for detecting a polarization of a ranging device. The polarization detection system comprises: at least two receiving elements with different polarizations, wherein the at least two receiving elements are configured to receive an EM (electromagnetic) signal emitted by the ranging device; a power and/or phase detector configured to detect individual signal power and/or phase information of the EM signal received with the at least two receiving elements; and a processor configured to determine the polarization of the EM signal based on the individual signal power and/or phase information. The processor is further configured to: determine a signal power value of the EM signal based on the individual signal power information and the polarization of the EM signal, and/or control one or more transmitting elements of a ranging test system to transmit an EM response signal based on the determined polarization of the EM signal, and/or adapt an RCS value of the EM response signal based on the determined polarization of the EM signal.

This achieves the advantage that the polarization of EM signals emitted by a ranging device can be efficiently determined. In particular, the polarization can be determined without mechanically moving the antennas of the detection system or of the ranging device. This greatly enhances an ease of use of the system, as the user can get correct measurements of the power level and/or feedback about the ranging system polarization without manually changing antenna configurations (e.g., of non-orthogonally polarized antennas).

The polarization detection system can comprise at least two or at least four antennas. For example, the antennas are linearly polarized antennas.

The ranging device can be a radar device. The EM signal and the EM response signal can be RF (radio frequency) signals, in particular radar signals. The EM response signal can be a signal which is transmitted towards the ranging device in response to receiving the EM signal. For instance, a radar target can be simulated by means of the EM response signal. However, the ranging device could also be of a different type, e.g. a LIDAR device. In this case, the EM signal and EM response signal can be signals in a frequency range used by the LIDAR device.

The receiving elements can be Rx antennas configured to receive EM signals in the form of RF signals (e.g., radar signals). The transmitting elements can be a Tx antennas configured to transmit the EM response signal in the form of an RF response signal (e.g., a radar signal).

The polarization detection system can be a component of the ranging test system, e.g. a ranging target simulator (RTS). The ranging test system can comprise at least one linearly polarized transmitting element, e.g. a Tx antenna. If the ranging device is a LIDAR device, the ranging test system can be a LIDAR test system.

In an implementation form, the processor is configured to detect a linear polarization direction of the EM signal based on differences between the individual signal power information detected via the at least two receiving elements.

In this way, a polarization of the EM signal which is misaligned with the individual antenna polarizations of the at least two receiving elements can be detected (e.g., a polarization between the directions of the at least two antennas).

In an implementation form, the processor is configured to detect a circular polarization of the EM signal based on differences between the individual phase information detected via the at least two receiving elements.

For example, in case of a circular polarization, the individual signal power values detected via the at least two receiving elements are equal or differ by less than a threshold value. Thus, circular polarization in the EM signal can be detected if all receiving elements roughly detect the same signal power but different signal phases.

In an implementation form, the processor is configured to control the one or more transmitting elements of the ranging test system to transmit the EM response signal with the determined polarization of the EM signal.

For example, the processor is configured to control the one or more transmitting elements to use beamforming to generate the EM response signal with the determined polarization of the EM signal if no single transmitting element of the one or more transmitting elements is aligned to the determined polarization of the EM signal.

In an implementation form, the polarization detection system further comprises a user interface configured to output the determined polarization of the EM signal.

In an implementation form, the polarization detection system further comprises a database, wherein the processor is configured to store the determined polarization of the EM signal in the database.

In an implementation form, the power and/or phase detector is arranged downstream of the at least two receiving elements and comprises: a logarithmic amplifier, a thermal detector and/or an analog-to-digital converter (ADC) with a digital signal processor (DSP). For instance, the DSP can calculate the signal power.

According to a second aspect, the disclosure relates to a ranging test system comprising the polarization detection system according to the first aspect of the disclosure.

The ranging test system can be a system for testing ranging devices, such as automotive radar sensors. The ranging test system can comprise the one or more transmitting elements configured to transmit the EM response signal. For example, the ranging test system is a radar test system, such as a radar target simulator (RTS).

According to a third aspect, the disclosure relates to a method for detecting a polarization of a ranging device. The method comprises: receiving an EM signal emitted by the ranging device with at least two receiving elements with different polarizations; detecting individual signal power and/or phase information of the EM signal received with the at least two receiving elements; and determining the polarization of the EM signal based on the individual signal power and/or phase information. The method further comprises: determining a signal power value of the EM signal based on the individual signal power information and the polarization of the EM signal, and/or controlling one or more transmitting elements of a ranging test system to transmit an EM response signal based on the determined polarization of the EM signal, and/or adapting an RCS value of the EM response signal based on the determined polarization of the EM signal.

In an implementation form, the step of determining the polarization of the EM signal based on the individual signal power and/or phase information is carried out by a software executed by a computer or an integrated circuit.

According to a fourth aspect, the disclosure relates to a polarization detection system for detecting a polarization of a ranging device. The polarization detection system comprises: a receiving element which is mechanically movable to different orientations representing different polarizations, wherein the at least one receiving element is configured to receive an EM signal emitted by the ranging device while being arranged at least two different orientations; a power and/or phase detector configured to detect individual signal power and/or phase information of the EM signal received with the receiving element in the at least two different orientations; and a processor configured to determine the polarization of the EM signal based on the individual signal power and/or phase information. The processor is further configured to: determine a signal power value of the EM signal based on the individual signal power information and the polarization of the EM signal, and/or control one or more transmitting elements of a ranging test system to transmit an EM response signal based on the determined polarization of the EM signal, and/or adapt an RCS value of the EM response signal based on the determined polarization of the EM signal.

For instance, the receiving element is an Rx antenna and the transmitting elements are Tx antennas. The EM signal and the EM response signal can be RF signal, e.g. radar signals.

In an implementation form, the processor is configured to detect a linear polarization direction of the EM signal based on differences between the individual signal power information detected in the at least two different orientations.

In an implementation form, the processor is configured to detect a circular polarization of the EM signal based on differences between the individual phase information detected in the at least two different orientations.

In an implementation form, the processor is configured to control the one or more transmitting elements of the ranging test system to transmit the EM response signal with the determined polarization of the EM signal.

For example, the processor is configured to control the one or more transmitting elements to use beamforming to generate the EM response signal with the determined polarization of the EM signal if no single transmitting element of the one or more transmitting elements is aligned to the determined polarization of the EM signal.

In an implementation form, the polarization detection system further comprises a user interface configured to output the determined polarization of the EM signal.

In an implementation form, the polarization detection system further comprises a database, wherein the processor is configured to store the determined polarization of the EM signal in the database.

In an implementation form, the power and/or phase detector is arranged downstream of the at least two receiving elements and comprises: a logarithmic amplifier, a thermal detector and/or an analog-to-digital converter (ADC) with a digital signal processor (DSP). For instance, the DSP can calculate the signal power.

For example, the polarization detection system according to the fourth aspect of the disclosure can be a component of a ranging test system, e.g. an RTS, which comprises the one or more transmitting elements.

### Brief Description of the Drawings

The above-described aspects and implementation forms of the present disclosure will be explained in the following description of specific embodiments in relation to the enclosed drawings, in which:
Fig. 1 shows a schematic diagram of a polarization detection system according to an embodiment;
Fig. 2 shows an arrangement of receiving and transmitting elements of a polarization detection system according to an embodiment;
Fig. 3 shows a flow diagram of a polarization detection method according to an embodiment; and
Fig. 4 shows a schematic diagram of a polarization detection system according to an embodiment.

### Detailed Descriptions of Embodiments

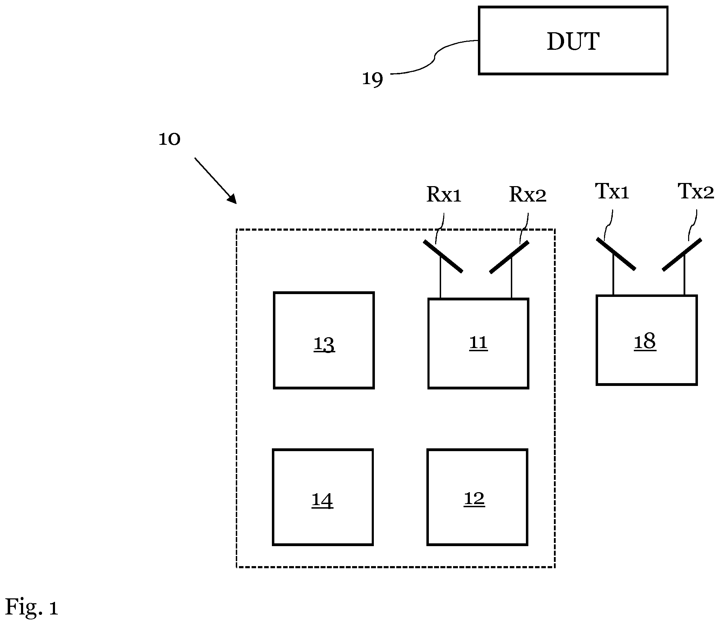

Fig. 1 shows a schematic diagram of a polarization detection system 10 for detecting a polarization of a ranging device 19 according to an embodiment.

The polarization detection system 10 comprises at least two receiving elements Rx1, Rx2 with different polarizations, wherein the at least two receiving elements Rx1, Rx2 are configured to receive an EM signal emitted by the ranging device 19; a power and/or phase detector 11 configured to detect individual signal power and/or phase information of the EM signal received with the at least two receiving elements Rx1, Rx2; and a processor 12 configured to determine the polarization of the EM signal based on the individual signal power and/or phase information.

The processor 12 is further configured to carry out at least one of the following tasks: determine a signal power value of the EM signal based on the individual signal power information and the polarization of the EM signal, control one or more transmitting elements Tx1, Tx2 of a ranging test system to transmit an EM response signal based on the determined polarization of the EM signal, and/or adapt an RCS value of the EM response signal based on the determined polarization of the EM signal.

In this way the polarization(s) of the ranging device can be efficiently determined. In particular, the polarization(s) can be determined without mechanically moving antennas, e.g. the receiving elements Rx1, Rx2 of the detection system 10 or antennas of the ranging device 19. This greatly enhances the ease of use of the system 10, as the user can get correct measurements of the power level and/or feedback about the ranging system polarization without manually changing antenna configurations.

For example, each of the at least two receiving elements Rx1, Rx2 is configured to receive the EM signals, wherein the power and/or phase detector 11 is configured to detect the individual signal power and/or signal phase information of the EM signal received with each of the at least two receiving elements. In other words, each of the individual signal power and/or phase information is related to one of the receiving elements Rx1, Rx2. The individual signal power and/or phase information can comprise signal power and/or phase values measured via one of the antennas Rx1, Rx2.

The polarization detection system 10 can comprise at least two or at least four receiving elements. The receiving elements Rx1, Rx2 can be static antennas. For example, the receiving elements Rx1, Rx2 are linearly polarized antennas. In case of two receiving elements Rx1, Rx2, as shown in Fig. 1, the two receiving elements can be orthogonally polarized to each other.

The processor 12 can be a microprocessor or an ASIC. The processor 12 can execute software to determine the polarization based on the individual signal power and/or phase information. For instance, the processor 12 is a processor of the ranging test system, which e.g. also controls the transmission of EM response signals via the transmitting element(s) Tx1, Tx2.

In the example shown in Fig. 1, the receiving elements Rx1, Rx2 are Rx antennas and the transmitting elements Tx1, Tx2 are Tx antennas.

The ranging device 19 can be a radar device. For instance, the ranging device 19 is a radar sensor, e.g., an automotive radar sensor and/or a ranging system. The ranging device 19 can emit (e.g., transmit via Tx antennas) the EM signal when activated. The polarization of the ranging device 19 refers to the polarization of EM signal(s) transmitted by the ranging device, in particular the polarization of the EM signal(s) refers to the polarization of their electrical field component. The ranging device 19 can be a device-under-test (DUT).

The EM signal and the EM response signal can be RF signals or more specifically radar signals. The EM response signal can be a signal which is transmitted towards the ranging device 19 in response to receiving the EM signal, e.g. by a ranging test system which comprises the polarization detection system 10. For instance, a radar target can be simulated by means of the EM response signal.

Alternatively, the ranging device 19 can be of a different type. For instance, the ranging device 19 can be a LIDAR (e.g., an FMCW LIDAR) device or sensor and the EM signal and EM response signal can be in a frequency range used by the LIDAR device or sensor. In this case, the receiving elements may be photodetectors and the transmitting elements may be lasers or other light emitting devices. The ranging test system could then be a LIDAR test system.

To determine the polarization of the EM signal, the at least two (or at least four) receiving elements Rx1, Rx2 of the polarization detection system 10 can be switched to the power and/or phase detector 11 individually (e.g., subsequently). By performing measurements on all receiving elements Rx1, Rx2 (e.g., via time-division multiplexing), the polarization of the ranging device can be derived from the signal power received via each receiving element Rx1, Rx2 and the known polarization of the respective elements Rx1, Rx2.

For instance, the processor 12 is configured to detect a linear polarization direction of the EM signal based on the different signal powers detected via each of the at least two Rx antennas. For example, in a system 10 with four Rx antennas, one of the Rx antennas detects the highest power level (co-polarized antenna), another antenna detects zero power (cross-polarized antenna), and the other two remaining polarizations detect less power (e.g. 3dB less power) than the co-polarized Rx antenna. From this information (i.e., received signal power on each Rx antenna and antenna polarizations), the direction of the linear polarization of the RF signal can be derived.

In addition or alternatively, the processor can be configured to detect a circular polarization of the EM signal based on differences between the individual phase information detected via the at least two receiving elements. In case of a circular polarization, the individual signal power values detected via each receiving element Rx1, Rx2 can be equal or differ by less than a threshold value while the signal phases detected with the individual receiving elements Rx1, Rx2 are different from each other (e.g., by more than a further threshold). For example, in case of four Rx antennas and 90 degrees offsets between the antenna polarizations, essentially the same power can be detected on all antennas in case of a circular polarized EM signal.

It might not always be required to derive the exact rotation direction of the circular polarization by the system 10. For many applications, it can be sufficient to know that an incident wave is circularly polarized, regardless of the exact direction. This can be achieved by comparing the power levels without evaluating the phase information.

Thus, the phase information can be used to reduce the overall number of receiving elements and/or to detect other polarizations which cannot be directly detected (e.g., circular polarization) by single antennas.

In summary, the system 10 allows detecting different polarizations of an EM signal emitted by a DUT 19 with static Rx antennas Rx1, Rx2. For instance, this enables a user of the system 10 to derive the E-filed (polarization) of the EM device 19 automatically. In particular, there is no need to mechanically switch (e.g., rotate) the polarizations on the power measurement or the target simulation side. This is advantageous, as it is very difficult for non-radio frequency experts to perform such mechanical rotation (e.g., due to the highly sensitive components involved, such as E-band rectangular waveguides, etc.).

The signal power value can be a total or a corrected signal power value of the EM signal which is determined based on the signal power received with the Rx antennas Rx1, Rx2, thereby taking into account the different polarizations of these antennas relative to the polarization of the EM signal. For instance, in a polarization detection system 10 comprising four Rx antennas, the EM signal components received with three of the four receiving elements (which can detect the EM signal polarization) are used to calculate the total or corrected power value, while the fourth Rx antenna (which is e.g. cross-polarized to the EM signal) is omitted.

Thus, a precise power (e.g. EIRP, or radiated power) measurement can be guaranteed by utilizing the correct antenna polarizations (which are, e.g., traceable with an accredited end-of-line calibration). For instance, internally saved correction tables (for the individual antenna polarizations) can be applied to all upcoming power measurements on different Rx antennas. In addition or alternatively, these correction tables can be applied to corrections of an RCS (radar cross section) of the EM response signal for radar target simulations in the ranging test system. For example, by means of an automatic restriction of the available Rx and/or Tx antennas (e.g., restricted to non-cross-polarized antennas) of the ranging test system, the ease of use of choosing correct / usable antennas for the respective DUT 19 polarization can be enhanced significantly.

The power and/or phase detector 11 can be arranged downstream of the at least two receiving elements Rx1, Rx2 and can comprise at least one of: a logarithmic amplifier, a thermal detector and/or an ADC with a DSP that calculates the power value.

The power and/or phase detector 11 can be configured to perform power measurements at the frequency of the EM signals, e.g. 24 GHz or 77 GHz.

Optionally, the polarization detection system 10 can comprise a user interface 13 and/or a database 14.

The user interface 13 can be a display, a GUI or signal interface connected to an external device. The user could also manually align the antennas of the EM sensor and/or the polarization detection system and/or the RTS based on the output information.

The database 14 can be stored in a data storage of the polarization detection system 10 (or connected to the system 10). The processor 12 can be configured to store the determined polarization of the EM signal in the database. In this way, a database 14 of different ranging systems, e.g. of different vehicles, can be generated. From the database 14, the polarization of the ranging device can be known before testing. For instance, the database could also store the correction tables for the individual antenna polarizations.

In summary, the polarization detection system 10, as shown in Fig. 1, allows for OTA automatic electromagnetic polarization detection for ranging devices 19, e.g. automotive ranging systems, based on scalar power measurements.

The polarization detection system 10 can be a component of a ranging test system for testing ranging devices. The ranging test system can be a radar test system, such as a radar target simulator (RTS).

The ranging test system can comprise a signal generator 18 configured to generate the EM response signal(s) to be transmitted by one or more transmitting elements Tx1, Tx2. The transmitting elements Tx1, Tx2 can be a linearly polarized Tx antennas.

The ranging test system, e.g. the RTS, can use the one or more transmitting elements Tx1, Tx2 to transmit EM response signals towards the EM device 19, e.g. to simulate targets for the ranging device 19 or to provide a feedback to the device 19 during a polarization measurement. The EM response signal can be adapted based on the determined polarization of the EM signal received form the ranging sensor, e.g. by only emitting the EM response signal with transmitting elements Tx1, Tx2 whose polarization matches the polarization of the EM signal and/or by adapting the radar cross section (RCS) value of the EM response signal transmitted to the ranging device.

For example, processor 12 is configured to control the one or more transmitting elements Tx1, Tx2 of the ranging test system to transmit the EM response signal with the determined polarization of the EM signal. If no single transmitting element of the one or more transmitting elements Tx1, Tx2 is aligned to the determined polarization of the EM signal, the processor 12 can be configured to control the one or more transmitting elements Tx1, Tx2 to use beamforming to generate the EM response signal with the determined polarization.

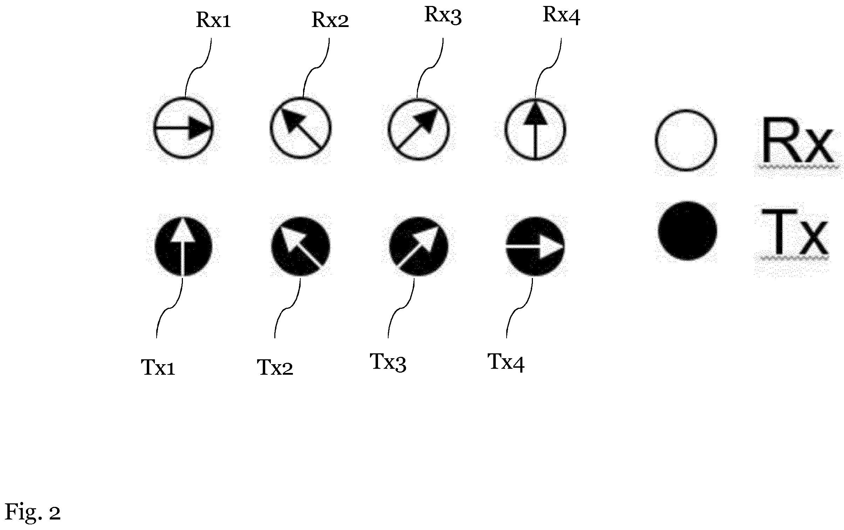

Fig. 2 shows an arrangement of receiving elements Rx1-Rx4 and transmitting elements Tx1-Tx4 of a polarization detection system according to an embodiment. The receiving elements are Rx antennas and the transmitting elements are Tx antennas. The antennas Rx1-Rx4, Tx1-Tx4 and their respective polarizations are thereby indicated by arrows. This arrangement, which may be referred to as "center antenna block", may comprise four Rx antennas with different polarizations and four Tx antennas with different polarizations and could be used in the polarization detection system 10 as shown in Fig. 1.

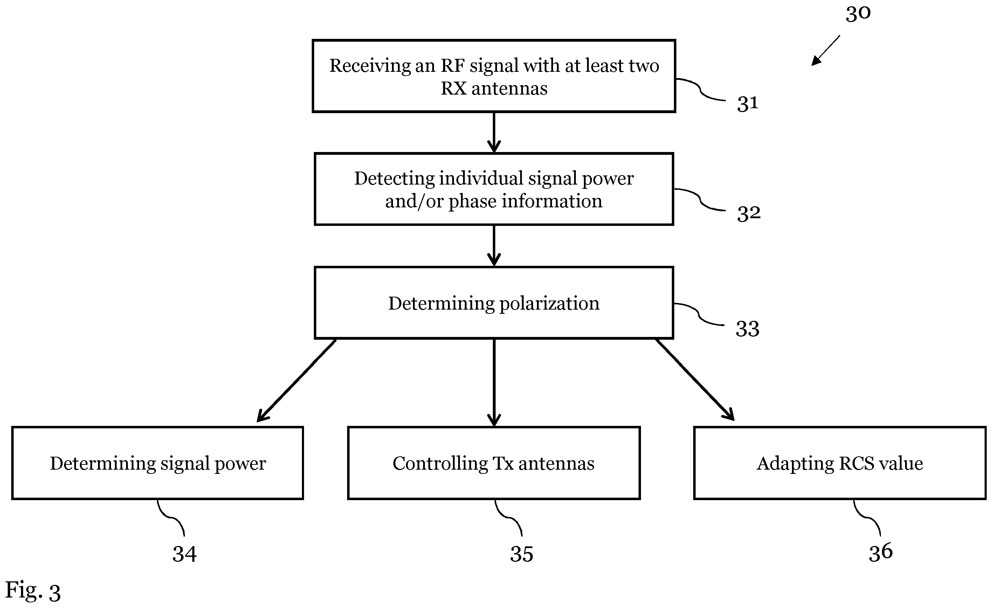

Fig. 3 shows a flow diagram of a method 30 for detecting a polarization of a ranging device 19 according to an embodiment. The method 30 could be carried out with the polarization detection system 10 as shown in Fig. 1.

The method 30 comprises the steps of: receiving 31 the EM signal emitted by the ranging device 19 with at least two receiving elements Rx1, Rx2 with different polarizations; detecting 32 individual signal power and/or phase information of the EM signal received with the at least two receiving elements Rx1, Rx2; and determining 33 the polarization of the EM signal based on the individual signal power and/or phase information.

The method 30 further comprises at least one of the following steps: determining 34 the signal power value of the EM signal based on the individual signal power information and the polarization of the EM signal, controlling 35 one or more transmitting elements of a ranging test system (e.g., a RTS) to transmit an EM response signal based on the determined polarization of the EM signal, and/or adapting 36 the RCS value of the EM response signal based on the determined polarization of the EM signal.

The step of determining 33 the polarization of the EM signal based on the individual signal power and/or phase information can be carried out by a software executed by a computer or an integrated circuit (e.g., by the processor 12).

For instance, the method comprises the further steps of: detecting the linear polarization of the EM signal based on differences between the individual signal power information detected via the at least two receiving elements; and/or detecting the circular polarization of the EM signal based on differences between the individual phase information detected via the at least two receiving elements.

In a further example, the method comprises the step of: controlling the one or more transmitting elements of the ranging test system to transmit the EM response signal with the determined polarization of the EM signal. For instance, the one or more transmitting elements can be controlled to use beamforming to generate the EM response signal with the determined polarization if no single transmitting element of the one or more transmitting elements is aligned to the determined polarization of the EM signal.

With this method 30, it is possible to run a polarization detection algorithm and receive feedback for the polarization of the ranging device 19. By an automatic adjustment of internal correction tables and/or choosing correct RTS antennas for sending an EM response signal, an ease of use can be enhanced significantly compared to a method which requires a mechanical movement of antennas.

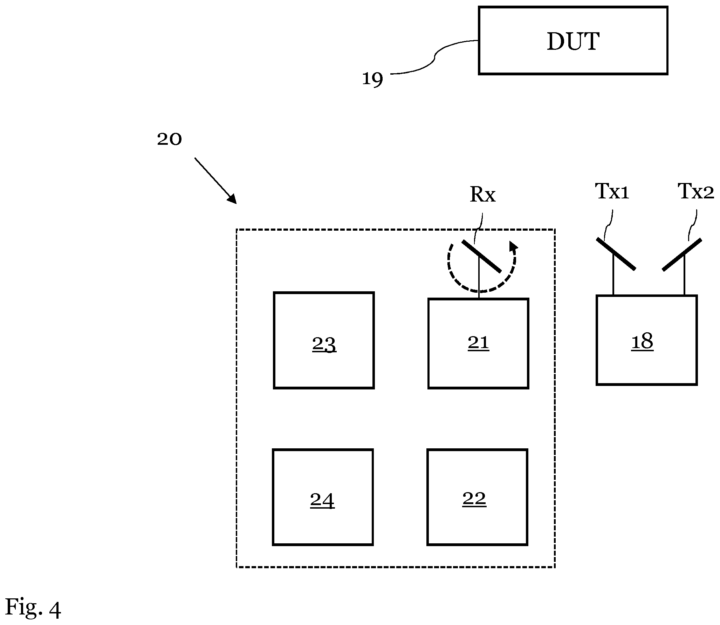

Fig. 4 shows a schematic diagram of a polarization detection system 20 for detecting a polarization of a ranging device 19 according to an embodiment.

This polarization detection system 20 comprises a receiving element (e.g., an Rx antenna) which is mechanically movable to different orientations representing different polarizations (i.e., different polarization directions), wherein the at least one receiving element is configured to receive an EM signal emitted by the ranging device 19 while being arranged in at least two different orientations; a power and/or phase detector 21 configured to detect individual signal power and/or phase information of the EM signal received with the receiving element in the at least two different orientations; and a processor 22 configured to determine the polarization of the EM signal based on the individual signal power and/or phase information. The processor 22 is further configured to: determine a signal power value of the EM signal based on the individual signal power information and the polarization of the EM signal, control one or more transmitting elements Tx1, Tx2 (e.g., Tx antennas) of a ranging test system to transmit an EM response signal based on the determined polarization of the EM signal, and/or adapt an RCS value of the EM response signal based on the determined polarization of the EM signal.

Besides having a movable receiving element instead of at least two static receiving elements, the system 20 shown in Fig. 4 can be essentially identical to the system 10 shown in Fig. 1 and can comprise the same elements and configurations. For instance, the system 20 can also comprise a user interface 23 and/or a database 24 which can be used for the same tasks as the elements 13, 14 of the system 10 in Fig. 1.

The movement of the at least one receiving element is indicated by the arrow in Fig. 3. Having a movable receiving element (e.g., Rx antenna) that can occupy different orientations and, thus, different polarization directions achieves the advantage that the number of required receiving elements can be reduced.

The polarization detection system 20 can also be a component of a ranging test system, e.g. an RTS, which further comprises one or more transmitting elements Tx1, Tx2 and a signal generator 18.

While various embodiments of the present disclosure have been described above, it should be understood that they have been presented by way of example only, and not limitation. Numerous changes to the disclosed embodiments can be made in accordance with the disclosure herein, without departing from the spirit or scope of the disclosure. Thus, the breadth and scope of the present disclosure should not be limited by any of the above-described embodiments. Rather, the scope of the disclosure should be defined in accordance with the following claims and their equivalents.

Although the disclosed embodiments have been illustrated and described with respect to one or more implementations, equivalent alterations and modifications will occur or be known to others skilled in the art upon the reading and understanding of this specification and the annexed drawings. In addition, while a particular feature of the present disclosure may have been disclosed with respect to only one of several implementations, such feature may be combined with one or more other features of the other implementations as may be desired and advantageous for any given or particular application.

## Claims

1. A polarization detection system (10) for detecting a polarization of a ranging device (19), comprising:
at least two receiving elements (Rx1, Rx2) with different polarizations, wherein the at least two receiving elements (Rx1, Rx2) are configured to receive an EM signal emitted by the ranging device (19);
a power and/or phase detector (11) configured to detect individual signal power and/or phase information of the EM signal received with the at least two receiving elements (Rx1, Rx2); and
a processor (12) configured to determine the polarization of the EM signal based on the individual signal power and/or phase information;
wherein the processor (12) is further configured to:
- determine a signal power value of the EM signal based on the individual signal power information and the polarization of the EM signal,
- control one or more transmitting elements of a ranging test system to transmit an EM response signal based on the determined polarization of the EM signal, and/or
- adapt an RCS value of the EM response signal based on the determined polarization of the EM signal.

2. The polarization detection system of claim 1,
wherein the processor (12) is configured to detect a linear polarization direction of the EM signal based on differences between the individual signal power information detected via the at least two receiving elements (Rx1, Rx2).

3. The polarization detection system of claim 1 or 2,
wherein the processor (12) is configured to detect a circular polarization of the EM signal based on differences between the individual phase information detected via the at least two receiving elements (Rx1, Rx2).

4. The polarization detection system of any of the preceding claims, further comprising:
wherein the processor (12) is configured to control the one or more transmitting elements of the ranging test system to transmit the EM response signal with the determined polarization of the EM signal.

5. The polarization detection system of claim 4,
wherein the processor (12) is configured to control the one or more transmitting elements to use beamforming to generate the EM response signal with the determined polarization of the EM signal if no single transmitting element of the one or more transmitting elements is aligned to the determined polarization of the EM signal.

6. The polarization detection system of any of the preceding claims, further comprising:
a user interface configured to output the determined polarization of the EM signal.

7. The polarization detection system of any of the preceding claims, further comprising:
a database, wherein the processor (12) is configured to store the determined polarization of the EM signal in the database.

8. The polarization detection system of any of the preceding claims, further comprising:
wherein the power and/or phase detector (11) is arranged downstream of the at least two receiving elements(Rx1, Rx2) and comprises: a logarithmic amplifier, a thermal detector (11) and/or an analog-to-digital converter with a digital signal processor (12).

9. A ranging test system comprising the polarization detection system of any of the preceding claims.

10. A method for detecting a polarization of a ranging device, comprising:
receiving an EM signal emitted by the ranging device (19)with at least two receiving elements (Rx1, Rx2) with different polarizations;
detecting individual signal power and/or phase information of the EM signal received with the at least two receiving elements (Rx1, Rx2); and
determining the polarization of the EM signal based on the individual signal power and/or phase information;
wherein the method further comprises:
- determining a signal power value of the EM signal based on the individual signal power information and the polarization of the EM signal,
- controlling one or more transmitting elements of a ranging test system to transmit an EM response signal based on the determined polarization of the EM signal, and/or
- adapting an RCS value of the EM response signal based on the determined polarization of the EM signal.

11. The method of claim 10,
wherein the step of determining the polarization of the EM signal based on the individual signal power and/or phase information is carried out by a software executed by a computer or an integrated circuit.

12. A polarization detection system for detecting a polarization of a ranging device, comprising:
a receiving element which is mechanically movable to different orientations representing different polarizations, wherein the at least one receiving element is configured to receive an EM signal emitted by the ranging device (19) while being arranged in at least two different orientations;
a power and/or phase detector (11) configured to detect individual signal power and/or phase information of the EM signal received with the receiving element in the at least two different orientations; and
a processor (12) configured to determine the polarization of the EM signal based on the individual signal power and/or phase information;
wherein the processor (12) further is configured to:
- determine a signal power value of the EM signal based on the individual signal power information and the polarization of the EM signal,
- control one or more transmitting elements of a ranging test system to transmit an EM response signal based on the determined polarization of the EM signal, and/or
- adapt an RCS value of the EM response signal based on the determined polarization of the EM signal.
